# EUROPÄISCHE PATENTSCHRIFT

(11) **EP 1 116 127 B1**
(45) Veröffentlichungstag und Bekanntmachung des Hinweises auf die Patenterteilung: **15.10.2003**
(21) Anmeldenummer: 99944253.6
(22) Anmeldetag: 01.07.1999
(51) Int. Cl.: G06F 15/78

(54) **PROGRAMMGESTEUERTE EINHEIT**
PROGRAM-CONTROLLED UNIT
UNITE COMMANDEE PAR PROGRAMME

(30) Priorität: 23.09.1998 DE 19843637
(43) Veröffentlichungstag der Anmeldung: 18.07.2001
(73) Patentinhaber: Infineon Technologies AG, 81669 München (DE)
(72) Erfinder: SIEMERS, Christian, D-31139 Hildesheim (DE)
(74) Vertreter: Jannig, Peter, Dipl.-Ing.
(86) Internationale Anmeldenummer: DE9901988
(87) Internationale Veröffentlichungsnummer: WO00017770

(56) Entgegenhaltungen:
- EP-A- 0 419 105
- EP-A- 0 567 790
- US-A- 5 142 625
- WOODWARD D R ET AL: "AN FPGA BASED WOODWARD D R ET AL: "AN FPGA BASED CONFIGURABLE I/O SYSTEM FOR AC DRIVE CONFIGURABLE I/O SYSTEM FOR AC DRIVE CONTROLLERS" CONTROLLERS" PROCEEDINGS OF THE INTERNATIONAL PROCEEDINGS OF THE INTERNATIONAL CONFERENCE ON COMPUTER DESIGN: VLSI IN CONFERENCE ON COMPUTER DESIGN: VLSI IN COMPUTERS AND PROCESSORS,US,LOS ALAMITOS, COMPUTERS AND PROCESSORS,US,LOS ALAMITOS, IEEE COMP. SOC. PRESS, Seite 424-427 IEEE COMP. SOC. PRESS, Seite 424-427 XP000488926 ISBN: 0-8186-6567-X XP000488926 ISBN: 0-8186-6567-X
- "MIT PROGRAMMIERBARER LOGIK VERHEIRATED" "MIT PROGRAMMIERBARER LOGIK VERHEIRATED" ELEKTRONIK,DE,FRANZIS VERLAG GMBH. ELEKTRONIK,DE,FRANZIS VERLAG GMBH. MUNCHEN, MUNCHEN, Bd. 47, Nr. 7, Seite 38 XP000778333 Bd. 47, Nr. 7, Seite 38 XP000778333 ISSN: 0013-5658 ISSN: 0013-5658
- "MIT PROGRAMMIERBARER LOGIK VERHEIRATET" "MIT PROGRAMMIERBARER LOGIK VERHEIRATET" ELEKTRONIK,DE,FRANZIS VERLAG GMBH. MUNCHEN, ELEKTRONIK,DE,FRANZIS VERLAG GMBH. MUNCHEN, Bd. 47, Nr. 7, Seite 38 XP000778333 ISSN: Bd. 47, Nr. 7, Seite 38 XP000778333 ISSN: 0013-5658 0013-5658

## Beschreibung

Die vorliegende Erfindung betrifft eine programmgesteuerte Einheit.

Programmgesteuerte Einheiten sind durch Software-Programme gesteuerte Einrichtungen, also Mikroprozessoren, Mikrocontroller oder dergleichen; sie existieren in einer Vielzahl verschiedenster Ausführungsformen und bedürfen keiner näheren Beschreibung.

Obgleich Mikroprozessoren, Mikrocontroller und dergleichen in den unterschiedlichsten Ausführungsformen erhältlich sind (oder vielleicht auch gerade deshalb), ist es schwierig oder bisweilen sogar unmöglich, einen Typen zu finden, der die im konkreten Einzelfall gestellten Anforderungen (und möglichst nur diese) erfüllen kann.

Dies trifft in besonderem Maße auf Mikrocontroller zu, denn in diese soll ja nach Möglichkeit die gesamte Peripherie (Analog/Digital-Wandler, Digital/Analog-Wandler, Timer, Interrupt-Controller etc.) integriert sein, die für die betreffende Anwendung benötigt wird.

Wird für die betreffende Anwendung ein Mikrocontroller ausgewählt, welcher - aus welchem Grund auch immer - nicht alle der gestellten Anforderungen erfüllen kann, so wird dadurch in der Regel die Hardware aufwendiger, innerhalb welcher derselbe eingesetzt werden soll. Dies gestaltet sich im Fall von Mikrocontrollern besonders schwierig und aufwendig, weil diese nicht dazu ausgelegt sind, mit Coprozessoren und dergleichen zusammenzuarbeiten.

Wird andererseits für die betreffende Anwendung ein Mikrocontroller ausgewählt, welcher mehr als gefordert leisten kann, so steigt dadurch in der Regel der Preis des denselben enthaltenden Produkts. Hinzu kommt, daß häufig auch der Betrieb der Mikrocontrollers aufwendiger und komplizierter wird. Es müssen nämlich auch die nicht benötigten Peripherie-Einheiten des Mikrocontrollers bei der Systementwicklung berücksichtigt und von dem die auszuführenden Befehle abarbeitenden intelligenten Kern des Mikrocontrollers (dem sogenannten Mikroprozessor-Core bzw. µP-Core) bestimmungsgemäß bedient werden.

Aus der EP-A-0 567 790 und der EP-A-0 419 105 sind programmgesteuerte Einheiten bekannt, von welchen bestimmte Teile individuell konfigurierbar sind. Dadurch können die vorstehend genannten Probleme jedoch nur zum Teil gelöst werden.

Der vorliegenden Erfindung liegt daher die Aufgabe zugrunde, die programmgesteuerte Einheit der Patentanspruche 1-4 derart auzugehen, daß diese für eine große Anzahl unterschiedlichster Anwendungsfälle jeweils optimal einsetzbar ist.

Diese Aufgabe wird erfindungsgemäß durch die in den Patentansprüchen 1 bis 4 beanspruchten programmgesteuerten Einheiten gelöst.

Diese programmgesteuerten Einheiten enthalten eine oder mehrere applikationsspezifisch konfigurierbare intelligente Schnittstellen, die so konfigurierbar sind,
- daß sie erhaltene Daten und/oder Signale auswerten und/oder verarbeiten, und/oder
- daß sie Befehle in die Befehls-Pipeline des die auszuführenden Befehle abarbeitenden intelligenten Kerns der programmgesteuerten Einheit injizieren, und/oder
- daß sie Interrupt Requests oder sonstige Ereignisse signalisierende Meldungen generieren und ausgeben, und/oder
- daß sie auf Interrupt Requests oder sonstige Ereignisse signalisierende Meldungen von mit ihr verbundenen Einrichtungen reagieren und/oder deren Weiterleitung unterbinden.

Bei entsprechender Konfiguration kann durch solche Schnittstellen erreicht werden, daß der intelligente Kern und eine oder mehrere Peripherie-Einheiten und/oder der intelligente Kern und eine oder mehrere Speichereinrichtungen und/oder zwei oder mehrere Peripherie-Einheiten untereinander und/oder eine oder mehrere Peripherie-Einheiten und eine oder mehrere Speichereinrichtungen unter minimaler Belastung des intelligenten Kerns wunschgemäß kooperieren.

Gestaltet man die Schnittstellen so, daß diese während des ganz normalen Betriebes der programmgesteuerten Einheit umkonfigurierbar sind, so kann die programmgesteuerte Einheit sogar dynamisch umkonfiguriert werden.

Es wurde mithin eine programmgesteuerte Einheit geschaffen, welche für eine große Anzahl unterschiedlichster Anwendungsfälle jeweils optimal einsetzbar ist.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Zeichnung näher erläutert. Es zeigen
- Figur 1: eine schematische Darstellung des Aufbaus der nachfolgend beschriebenen programmgesteuerten Einheit,
- Figur 2: eine schematische Darstellung des Aufbaus einer SLE-Schicht 12 der programmgesteuerten Einheit gemäß Figur 1,
- Figur 3: eine schematische Darstellung des Aufbaus einer Taktgenerierungs-Einheit 121 der SLE-Schicht 12 gemäß Figur 2,
- Figur 4: eine schematische Darstellung des Aufbaus einer Logikblock-Einheit 122 der SLE-Schicht 12 gemäß Figur 2, und
- Figur 5: eine Darstellung zur Veranschaulichung der Konfigurierung der Logikblock-Einheit 122 gemäß Figur 4 für ein praktisches Beispiel.

Die nachfolgend näher beschriebene programmgesteuerte Einheit ist ein Mikrocontroller. Es sei bereits an dieser Stelle darauf hingewiesen, daß es sich bei der programmgesteuerten Ein heit grundsätzlich auch um eine beliebige andere programmgesteuerte Einheit wie beispielsweise einen Mikroprozessor handeln kann.

Der betrachtete Mikrocontroller ist in den Figuren mit dem Bezugszeichen 1 bezeichnet. Er zeichnet sich dadurch aus, daß er eine oder mehrere applikationsspezifisch konfigurierbare intelligente Schnittstellen umfaßt.

Dieser neuartige Mikrocontroller-Aufbau wird im folgenden als applikationsspezifisch strukturierbare Controller-Architektur bzw. ASSC-Architektur bezeichnet.

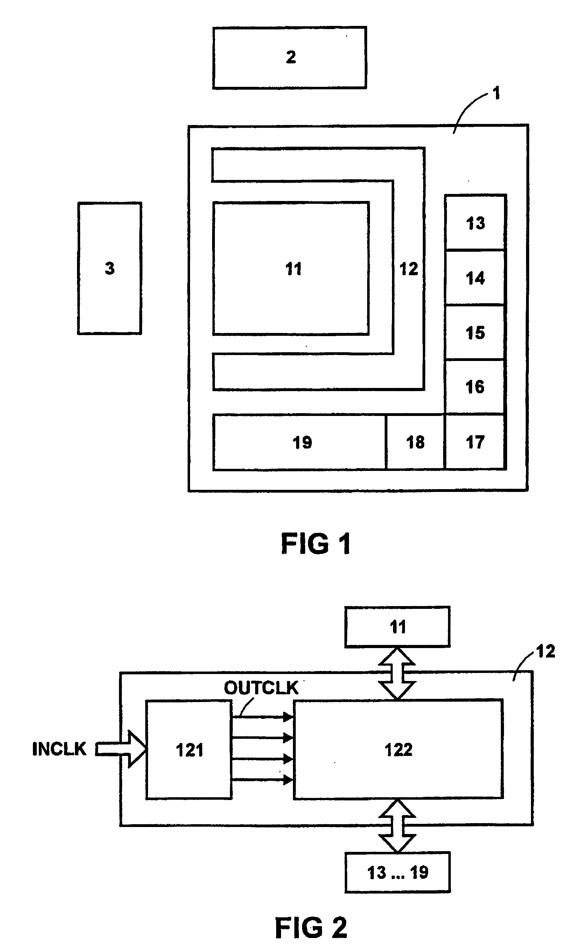

Die generelle Struktur eines die ASSC-Architektur aufweisenden Mikrocontrollers ist schematisch in Figur 1 dargestellt.

Der in der Figur 1 gezeigte Mikrocontroller 1 umfaßt einen meistens als Mikroprozessor-Core bzw. µP-Core bezeichneten, die auszuführenden Befehle abarbeitenden intelligenten Kern 11, eine sogenannte SLE-Schicht 12 sowie Peripherie-Einheiten 13 bis 19, wobei die Peripherie-Einheiten ihrerseits eine serielle Schnittstellen-Einheit 13, eine parallele Schnittstellen-Einheit 14, einen Analog/Digital-Wandler 15, einen Digital/Analog-Wandler 16, einen Timer 17, einen Interrupt-Controller 18 und gegebenenfalls weitere Peripherie-Einheiten 19 umfassen. Ferner sind ein externer Schreib/Lese-Speicher (RAM) 2 und ein externer Festspeicher (ROM) 3 vorgesehen; das RAM 2 und das ROM 3 können problemlos auch als interne Speicher realisiert werden.

Die SLE-Schicht 12 ist schaltungsmäßig zwischen dem µP-Core 11, innerhalb und/oder außerhalb der programmgesteuerten Einheit vorgesehenen Peripherie-Einheiten (beispielsweise den Peripherie-Einheiten 13 bis 19) und/oder Speichereinrichtungen (beispielsweise dem RAM2 und/oder dem ROM 3) angeordnet. Sie enthält strukturierbare Datenpfade und/oder Logikelemente, die sich so strukturieren bzw. konfigurieren lassen, daß sich die SLE-Schicht 12 als die mindestens eine applikationsspezifisch konfigurierbare Schnittstelle, genauer gesagt als konfigurierbare intelligente Schnittstelle zwischen dem µP-Core und einer oder mehreren Peripherie-Einheiten und/oder zwischen dem µP-Core und einer oder mehreren Speichereinrichtungen und/oder zwischen zwei oder mehreren Peripherie-Einheiten untereinander und/oder zwischen einer oder mehreren Peripherie-Einheiten und einer oder mehreren Speichereinrichtungen verwenden läßt.

Innerhalb der SLE-Schicht 12 existieren vorzugsweise sowohl direkte Verbindungen als auch konfigurierbare Datenpfade und Datenpfadverknüfungen zwischen den über die SLE-Schicht verbundenen oder verbindbaren Einrichtungen; durch die direkten Verbindungen wird erreicht, daß der neuartige Mikrocontroller auch wie ein herkömmlicher (keine SLE-Schicht 12 aufweisender) Mikrocontroller genutzt werden kann.

Wenn die SLE-Schicht 12 auf Speichereinrichtungen (beispielsweise zum RAM 2 und/oder zum ROM 3) Zugriff hat, kann sie für sich und/oder den µP-Core und/oder die Peripherie-Einheiten selbständig, d.h. ohne Mitwirken des µP-Core Daten von und zu den Speichereinrichtungen transferieren. Dadurch lassen sich Datentransfers schneller und ohne Beanspruchung des µP-Core 11 durchführen. Die SLE-Schicht 12 ist in diesem Fall so ausgebildet, daß sie konkurrierende Zugriffe auf Speichereinrichtungen erkennen und handhaben kann.

Die SLE-Schicht 12 kann auch ohne eine Schnittstelle zu den vorhandenen Speichereinrichtungen aufgebaut sein. Dann sind die SLE-Schicht und der µP-Core vorzugsweise so ausgebildet, daß die SLE-Schicht in den µP-Core (genauer gesagt in die Befehls-Pipeline desselben) Befehle injizieren kann, durch welche der µP-Core veranlaßbar ist, von der SLE-Schicht und/oder den Peripherie-Einheiten benötigte Datentransfers durchzuführen.

Der grundsätzliche Aufbau der SLE-Schicht 12 ist in Figur 2 veranschaulicht; sie besteht aus einer Taktgenerierungs-Einheit 121 und einer Logikblock-Einheit 122.

Die Taktgenerierungs-Einheit 121 dient der Versorgung des Logikblock-Einheit 122 mit einem oder mehreren verschiedenen Takten OUTCLK, welche basierend auf einem oder mehreren Master-Takten INCLK generiert werden. In der Taktgenerierungs-Einheit 121 werden beispielsweise Takte mit gegenüber dem oder den Master-Takten INCLK veränderter Frequenz, verändertem Tastverhältnis und/oder veränderter Phasenlage generiert.

Die Taktgenerierungs-Einheit 121 besteht im betrachteten Beispiel aus einer schnellen konfigurierbaren Logik, beispielsweise einer zur praktischen Realisierung einer disjunktiven Normalform geeigneten, sogenannten DNF-Logik (NICHT-UND-ODER-Logik) mit nachgeschalteter konfigurierbarer Speicherung, Invertierung/Pufferung und Rückkopplung. Im betrachteten Beispiel kommt eine zweistufige (zwei DNF-Blöcke aufweisende) DNF-Architektur zum Einsatz.

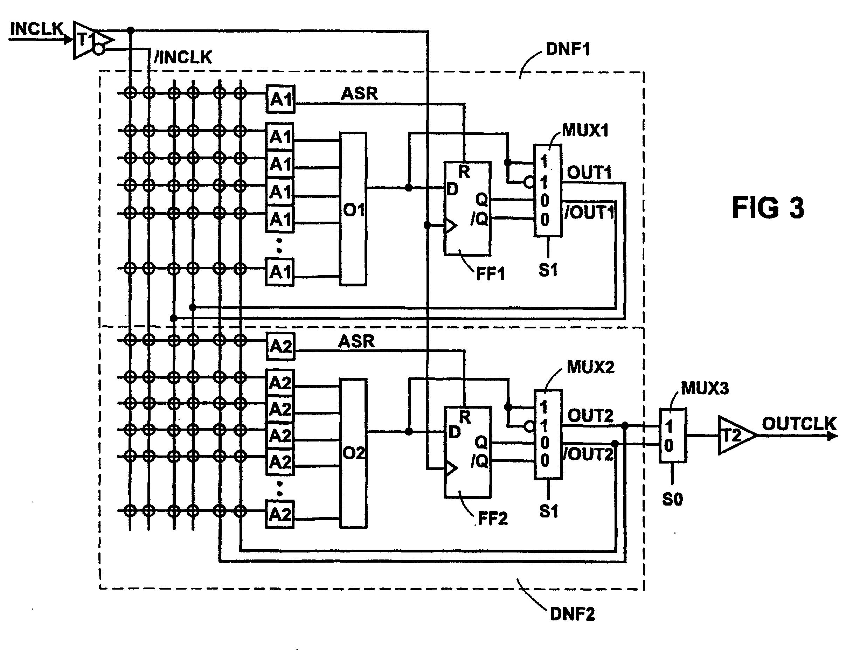

Der prinzipielle Aufbau einer Taktgenerierungs-Einheit 121, durch welche basierend auf einem Master-Takt INCLK (beispielsweise dem CPU-Takt) ein Ausgangs-Takt OUTCLK generiert wird, ist in Figur 3 veranschaulicht. Es wurde die bei PALs (programmable array logic) und GALs (Generic array logic) übliche Darstellungsform gewählt; transparent dargestellte Knotenpunkte repräsentieren konfigurierbare Verbindungen, gefüllt (schwarz) dargestellte Knotenpunkte repräsentieren feste Verbindungen.

Die Taktgenerierungs-Einheit 121 umfaßt im betrachteten Beispiel zwei identisch aufgebaute DNF-Blöcke DNF1 und DNF2, wobei der erste DNF-Block DNF1 eine erste DNF-Logik-Stufe repräsentiert und aus UND-Gliedern A1, einem ODER-Glied O1, einem (durch den Master-Takt getakteten) Flip-Flop FF1, und einem Multiplexer MUX1 besteht, und wobei der zweite DNF-Block DNF2 eine zweite DNF-Logik-Stufe repräsentiert und aus UND-Gliedern A2, einem ODER-Glied O2, einem (durch den Master-Takt getakteten) Flip-Flop FF2, und einem Multiplexer MUX2 besteht. Die beiden DNF-Blöcke DNF1 und DNF2 werden mit den selben Eingangssignalen versorgt. Die Eingangssignale umfassen im betrachteten Beispiel den Master-Takt INCLK, den invertierten Master-Takt /INCLK, ein Ausgangssignal OUT1 des ersten DNF-Blocks DNF1, das inverse Ausgangssignal /OUT1, ein Ausgangssignal OUT2 des zweiten DNF-Blocks DNF2, und das inverse Ausgangssignal /OUT2. Das Ausgangssignal OUT2 des zweiten DNF-Blocks DNF2 und das inverse Ausgangssignal /OUT2 werden einem Multiplexer MUX3 zugeführt, und dessen Ausgangssignal wird über einen Treiber T2 als der zu erzeugende Ausgangs-Takt OUTCLK ausgegeben.

Die an die jeweiligen DNF-Blöcke DNF1 und DNF2 angelegten Eingangssignale, genauer gesagt über konfigurierbare Verbindungen auswählbare Signalkombinationen werden an die UND-Glieder A1 bzw. A2 der jeweiligen DNF-Blöcke angelegt. Die Ausgangssignale der UND-Glieder A1 bzw. A2 werden den ODER-Gliedern O1 bzw. O2 zugeführt bzw. als ein Rücksetzsignal ASR zum asynchronen Rücksetzen der Flip-Flops FF1 bzw. FF2 verwendet. Die Ausgangssignale der ODER-Glieder O1 bzw. O2 werden als Eingangssignale der Flip-Flops FF1 bzw. FF2 und verwendet; sie (die Ausgangssignale der ODER-Glieder O1 bzw. O2) und die inversen Ausgangssignale werden zusätzlich an die Multiplexer MUX1 bzw. MUX2 angelegt. Die Ausgangssignale und die inversen Ausgangssignale der Flip-Flops FF1 bzw. FF2 werden ebenfalls als Eingangssignale an die Multiplexer MUX1 bzw. MUX2 angelegt. Das Ausgangssignal und das inverse Ausgangssignal der Multiplexer MUX1 bzw. MUX2 sind die vorstehend bereits erwähnten Ausgangssignale OUT1, /OUT1, OUT2 und /OUT2 der zwei DNF-Blöcke der Taktgenerierungs-Einheit 121.

Ein derartiger oder ähnlicher Aufbau der Taktgenerierungs-Einheit 121 gestattet die Erzeugung einer Vielzahl von Taktvariationen; durch die Rückkopplung von innerhalb der Taktgenerierungs-Einheit 121 erzeugten (internen) Signalen (im betrachteten Beispiel der Signale OUT1, /OUT1, OUT2, /OUT2) können auch nicht-binäre Tast- und Teilungsverhältnisse realisiert werden.

Die in der Figur 3 gezeigte Anordnung ist nur ein einfaches Beispiel zur Erläuterung des prinzipiellen Aufbaus der Taktgenerierungs-Einheit 121. In der Praxis sollte die Anzahl der durch die Taktgenerierungs-Einheit 121 erzeugten Takte nicht kleiner als vier sein. Die untere Grenze für die mögliche Anzahl der Terme pro DNF sollte ebenfalls vier sein. Pro generiertem Takt sollte mindestens ein internes Signal erzeugt und wie beispielsweise die internen Signale OUT1, /OUT1, OUT2 und /OUT2 als mögliche Basis für die Taktsignalerzeugung bereitgestellt werden.

Die Taktgenerierungs-Einheit 121 muß nicht zwangsläufig unter Verwendung einer zweistufigen DNF-Logik aufgebaut werden. Die verwendete DNF-Logik kann auch weniger Stufen (also nur eine Stufe) oder beliebig viel mehr Stufen aufweisen.

Anstelle der DNF-Logik kann auch eine andere strukturierbare Logik verwendet werden, beispielsweise NAND-Arrays oder multiplexer-basierte Varianten.

Die vorstehend bereits erwähnte Logikblock-Einheit 122 ist der eigentliche Kern der SLE-Schicht 12. Sie kann wie die Taktgenerierungs-Einheit 121 aus einer für die praktische Realisierung der disjunktiven Normalform geeigneten strukturierbaren Logik oder einer der genannten Alternativen bestehen. Durch solche universell einsetzbare strukturierbare Logiken können nahezu beliebige Verknüpfungen, Verarbeitungen und Auswertungen der Eingangssignale durchgeführt werden. Eine derartige Logikblock-Einheit 122 ist äußerst flexibel.

Im vorliegend betrachteten Beispiel wurde die Logikblock-Einheit 122 anders realisiert: sie enthält einen oder mehrere Logikblöcke, die zumindest teilweise in Sub-Blöcke mit vorbestimmten Aufgaben unterteilt sind. Dies vereinfacht die Komplexität der verwendeten Gatter, verringert aber - jedenfalls bei geeigneter Definition der Sub-Blöcke und entsprechenden Querverbindungen zwischen den einzelnen Sub-Blöcken - die Flexibilität der SLE-Schicht 12 kaum.

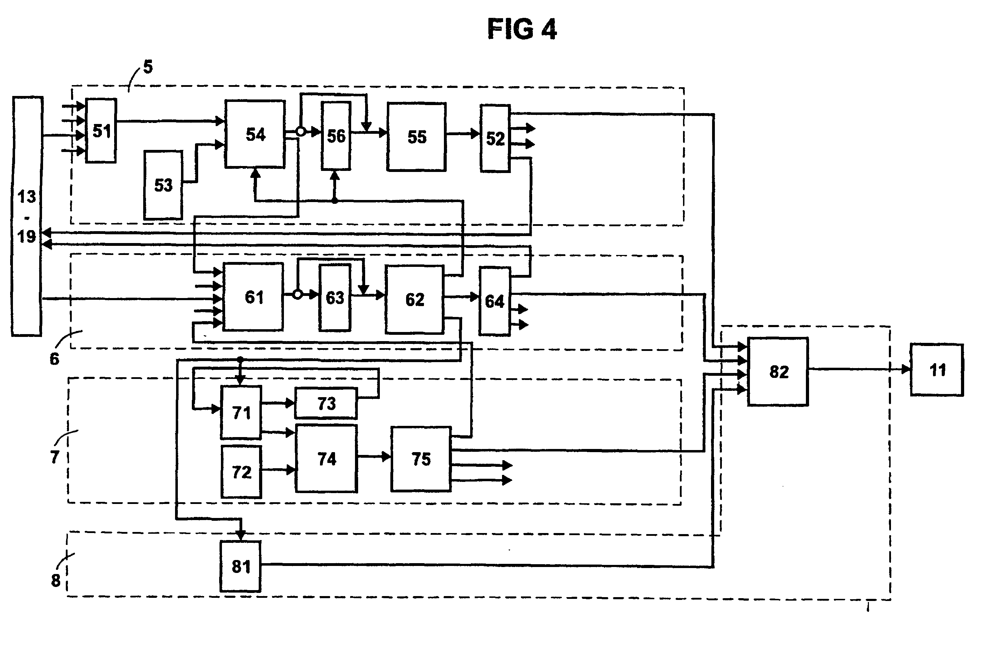

Der prinzipielle Aufbau eines in verschiedenartige Sub-Blöcke unterteilten Logikblocks ist in Figur 4 veranschaulicht. Der dort gezeigte Logikblock umfaßt vier Sub-Blöcke, nämlich
- einen ersten Sub-Block 5 für die Ein- und/oder Ausgabe von Daten und/oder Signalen und die Verarbeitung derselben,
- einen zweiten Sub-Block 6 für die zentrale Ablaufsteuerung für die innerhalb des betreffenden Logikblocks ablaufenden Vorgänge,
- einen dritten Sub-Block 7 für Adreßberechnungen, und
- einen vierten Sub-Block 8 für die Befehlsinjektionen in den µP-Core.

Die Sub-Blöcke bestehen im betrachteten Beispiel aus konfigurierbaren Multiplexern (zur wunschgemäßen Schaltung von Datenpfaden), Registern (zur Zwischenspeicherung von Daten und/oder codierten Zuständen) und strukturierbarer Logik (zur Verknüpfung von Daten und/oder Signalen miteinander und mit Konstanten und zur Codierung und Decodierung von Zuständen).

Der erste Sub-Block 5 dient im betrachteten Beispiel dazu, eingegebene Daten und/oder Signale untereinander oder mit Konstanten zu verknüpfen; er besteht im betrachteten Beispiel aus einem ersten Multiplexer 51, einem zweiten Multiplexer 52, einem Konstantenregister 53, einer ersten strukturierbaren Logik 54, einer zweiten strukturierbaren Logik 55, und einem Register 56.

Vom ersten Multiplexer 51 durchgeschaltete Daten und/oder Signale werden untereinander oder mit im Konstantenregister 53 gespeicherten Konstanten durch die strukturierbaren Logiken 54 und 55 verknüpft und über den zweiten Multiplexer 52 ausgegeben. Das zwischen den strukturierbaren Logiken 54 und 55 vorgesehene Register 56 dient als Zwischenspeicher, der beispielsweise dazu verwendbar ist, zu verknüpfende Daten so lange zwischenzuspeichern, bis die anderen Daten, mit denen sie zu verknüpfen sind, gültig sind; die von der strukturierbaren Logik 54 ausgegebenen Daten und/oder Signale können aber auch über einen Bypass direkt (ohne Umweg über das Register 56) zur strukturierbaren Logik 55 übertragen werden.

Die Multiplexer 51 (Quellenauswahl) und 52 (Zielauswahl) verbinden den ersten Sub-Block 5 mit verschiedenen Datenund/oder Signalquellen und Daten- und/oder Signalzielen. Daten- und/oder Signalquellen und Daten- und/oder Signalziele sind insbesondere die anderen Sub-Blöcke, der µP-Core 11, innerhalb und/oder außerhalb des Mikrocontrollers vorgesehene Peripherie-Einheiten (z.B. die Peripherie-Einheiten 13 bis 19) und/oder Speicher (z.B. das RAM 2 und/oder das ROM 3). Die Verbindung zu den genannten oder anderen Daten- und/oder Signalquellen und Daten- und/oder Signalzielen kann (muß aber nicht) über Datenbusse erfolgen.

Der erste Sub-Block 5 ist wirkungsmäßig mit der arithmetischlogischen Einheit (ALU) einer nach dem Von-Neumann-Prinzip arbeitenden programmgesteuerten Einheit vergleichbar.

Der zweite Sub-Block 6 ist im betrachteten Beispiel eine Statemachine zur zentralen Ablaufsteuerung im betreffenden Logikblock; er besteht im betrachteten Beispiel aus einer ersten strukturierbaren Logik 61, einer zweiten strukturierbaren Logik 62, einem Register 63, und einem Multiplexer 64.

Der strukturierbaren Logik 61 obliegt es, insbesondere in Abhängigkeit von den Zuständen, Signalen und Signalverläufen in bzw. von der Taktgenerierungs-Einheit 121, den anderen Sub-Blöcken, dem µP-Core 11, den Peripherie-Einheiten (z.B. den Peripherie-Einheiten 13 bis 19) und/oder den Speichern (z.B. dem RAM 2 und/oder dem ROM 3) den jeweiligen Zustand des betreffenden Logikblocks zu ermitteln; vom jeweiligen Zustand des Logikblocks hängt es ab, welcher Vorgang in diesem gerade ablaufen soll (muß). Der besagte Zustand, genauer gesagt ein diesen repräsentierender Datenwert kann im Register 63 gespeichert und bei Bedarf durch die strukturierbare Logik 62 decodiert werden. Die strukturierbare Logik 62 gibt ein oder mehrere Ausgangssignale aus. Diese Ausgangssignale sind auf dem jeweiligen Zustand des betreffenden Logikblocks basierende Steuersignale und werden über den Multiplexer 64 insbesondere an die anderen Sub-Blöcke, gegebenenfalls aber auch an den µP-Core, die Peripherie-Einheiten und/oder die Speichereinrichtungen ausgeben.

Durch den zweiten Sub-Block 6 lassen sich im betrachteten Beispiel verschiedene einfache Automatentypen (bis zu Mealy) realisieren, und zwar auch mit verschiedenen Takten.

Die dem zweitem Sub-Block 6 obliegende Aufgabe ist mit dem Steuerwerk einer Von-Neumann-CPU vergleichbar, wobei die Bearbeitung von Befehlen naturgemäß entfällt (die Zustände werden von äußeren Signalen getriggert durchlaufen).

Der dritte Sub-Block 7 dient im betrachteten Beispiel insbesondere (aber nicht ausschließlich) der Adreßberechnung für blockweise Datentransfers; er besteht im betrachteten Beispiel aus einem Adreßregister 71, einem Konstantenregister 72, einer Inkrementier/Dekrementier-Einheit 73, einer ersten strukturierbaren Logik 74, und einer zweiten strukturierbaren Logik 75.

Der dritte Sub-Block 7 kann Quellen- und Zieladressen errechnen und diese an die anderen Sub-Blöcke, den µP-Core, die Peripherie-Einheiten und/oder den Speicher ausgeben.

Die jeweils aktuelle Adresse ist im Adreßregister 71 gespeichert und kann durch die Inkrementier/Dekrementier-Einheit 73 inkrementiert oder dekrementiert werden. Das Konstantenregister 72 ist dazu ausgelegt, eine Endadresse zu speichern, und durch die strukturierbaren Logiken kann ein Adreßvergleich durchgeführt werden (um beispielsweise überprüfen zu können, ob die im Adreßregister 71 gespeicherte Adresse die im Konstantenregister 72 gespeicherte Endadresse erreicht hat).

Das Vorsehen dieses dritten Sub-Blocks 7 ist optional und ist insbesondere (aber nicht ausschließlich) dann sehr nützlich, wenn die SLE-Schicht 12 einen direkten Zugriff zum Speicher hat.

Der vierte Sub-Block 8 dient im betrachteten Beispiel zur Injektion von Befehlen in die Pipeline des µP-Core 11; er besteht im betrachteten Beispiel aus einem Konstantenregister 81 und einer strukturierbaren Logik 82.

Die Injektion von Befehlen erfolgt unter Steuerung durch den zweiten Sub-Block 6, genauer gesagt durch die von diesem ausgegebenen Steuersignale. Der Befehlscode des zu injizierenden Befehls ist im Konstantenregister 81 gespeichert und wird bei Bedarf (gegebenenfalls zusammen mit Adreß- und Dateninformationen) über die strukturierbare Logik 82 an den µP-Core 11 übermittelt; die strukturierbare Logik 82 wird hierzu bei Bedarf vom zweiten Sub-Block 6 in einen Zustand versetzt, in dem der im Konstantenregister 81 gespeicherte Befehlscode (gegebenenfalls zusammen mit den aus dem ersten Sub-Block 5 ausgegebenen Daten und/oder der aus dem dritten Sub-Block 7 ausgegebenen Adresse) in die Pipeline des µP-Core injiziert wird.

Wie vorstehend zumindest teilweise schon erwähnt oder angedeutet wurde, bestehen zwischen den einzelnen Sub-Blöcken 5 bis 8 diverse Querverbindungen. Die in der Figur 4 eingezeichneten Querverbindungen sind nur als beispielhaft anzusehen. Die Anzahl der Querverbindungen sowie deren Anfangsund Endpunkte hängen insbesondere von der konkreten Anwendung des betreffenden Logikblocks und der Anzahl und der Funktion der Sub-Blöcke desselben ab und können bei Bedarf als konfigurierbare Verbindungen ausgelegt sein.

Die zumindest teilweise Aufteilung der Logikblöcke der Logikblock-Einheit 122 der SLE-Schicht 12 in Sub-Blöcke ermöglicht die praktische Realisierung der Logikblöcke mit minimalem Aufwand. Insbesondere müssen erheblich weniger Verknüpfungsmöglichkeiten vorgesehen werden als bei der Realisierung der Logikblock-Einheit durch eine oder mehrere universell einsetzbare strukturierbare Logiken; dadurch, daß jeder Sub-Block nur eine genau definierte Aufgabe erfüllen muß, müssen die Sub-Blöcke nämlich - anders als universell einsetzbare strukturierbare Logiken - jeweils nur einige wenige Signale miteinander verknüpfen können.

Die Aufgaben, die die jeweiligen Sub-Blöcke zu erfüllen haben, und die Querverbindungen zwischen den einzelnen Sub-Blöcken ermöglichen es, daß die betreffenden Logikblöcke ähnlich leistungsfähig sind wie unter Verwendung von universell einsetzbaren strukturierbaren Logiken aufgebaute Logikblöcke.

Dies gilt auch dann, wenn die Logikblöcke in Sub-Blöcke aufgeteilt sind, die anders aufgebaut sind und/oder andere Aufgaben zu erfüllen haben und/oder andere Querverbindungen aufweisen und/oder in einer größeren oder kleineren Anzahl vorgesehen sind als die im vorliegend betrachteten Beispiel zum Einsatz kommenden und unter Bezugnahme auf die Figur 4 beschriebenen Sub-Blöcke 5 bis 8.

Bei Datengruppenoperationen sind gegebenenfalls zusätzlich Speichereinheiten in die SLE-Schicht 12 zu integrieren. Dann müssen für spätere Berechnungen benötigte Ergebnisse nicht in außerhalb der SLE-Schicht 12 vorgesehene Speicher ausgelagert werden, sondern können gleich intern innerhalb der SLE-Schicht 12 (zwischen-)gespeichert werden.

Die strukturierbaren Logiken, die in den Sub-Blöcken zum Einsatz kommen, sind im betrachteten Beispiel DNF-Logiken, deren Aufbau im wesentlichen dem Aufbau der in der Taktgenerierungs-Einheit 121 verwendeten DNF-Logiken entspricht; die Ein- und Ausgangssignale sind dann natürlich keine Taktsignale, sondern Daten und/oder Steuersignale, und benötigte Taktsignale (beispielsweise zur Taktung der Flip-Flops) werden aus den von der Taktgenerierungs-Einheit 121 generierten Taktsignalen ausgewählt.

Es besteht allerdings keine Einschränkung darauf, daß die strukturierbaren Logiken der Logikblock-Einheit 122 solche oder ähnliche DNF-Logiken sind; es können statt dessen auch NAND-Arrays, multiplexer-basierte Varianten oder sonstige strukturierbare Logiken zum Einsatz kommen.

Die Konfigurierung der konfigurierbaren Elemente der SLE-Schicht, d.h. die Konfigurierung der Multiplexer, der konfigurierbaren Verbindungen innerhalb der strukturierbaren Logiken und der Register kann dem Wesen nach wie die Konfigurierung der bekannten feldprogrammierbaren Logiken (PLAs, GALs, PLDs, FPGAs etc.) erfolgen.

Eine erste Möglichkeit hierzu besteht im (irreversiblen) Herstellen bzw. Löschen von Verbindungen unter Verwendung sogenannter Fuses oder Antifuses.

Eine andere Möglichkeit besteht in der Durchführung einer reversiblen Konfigurierung basierend auf die gewünschte Konfiguration repräsentierenden Daten, wobei die Daten in innerhalb oder außerhalb der programmgesteuerten Einheit vorgesehenen EPROMs, EEPROMs oder dergleichen gespeichert werden. Dadurch kann die Konfiguration der programmgesteuerten Einheit eine begrenzte Anzahl von Malen geändert werden.

Eine weitere Möglichkeit besteht in der Durchführung einer reversiblen Konfigurierung basierend auf die gewünschte Konfiguration repräsentierenden Daten, wobei die Daten jedoch in einem RAM oder dergleichen gespeichert werden. Dadurch kann die Konfiguration der programmgesteuerten Einheit unbegrenzt oft und sehr schnell geändert werden.

Die EPROMs, EEPROMs, RAMs oder sonstigen Speicher, in denen die die Konfiguration der programmgesteuerten Einheit repräsentierenden Daten gespeichert sind, sind vorzugsweise so ausgebildet, daß sie in den Speicher- oder I/O-Bereich einblendbar sind, auf den der µP-Core 11 zugreifen kann. Dann kann die Konfiguration der SLE-Schicht 12 durch den µP-Core 11 selbst wunschgemäß eingestellt werden.

Wenn ausgeschlossen werden soll, daß durch die Konfiguration der SLE-Schicht 12 der Betrieb der programmgesteuerten Einheit gestört wird, kann vorgesehen werden, die Konfiguration nur zu vorbestimmten Zeitpunkten (beispielsweise innerhalb einer vorbestimmten Zeit nach dem Rücksetzen der programmgesteuerten Einheit) zu gestatten.

Bei entsprechender Konfigurierung der SLE-Schicht 12 können dieser bestimmte Aufgaben übertragen werden, deren Abarbeitung bislang ausschließlich oder weitestgehend durch den µP-Core 11 erfolgen konnte oder mußte. Zu diesen Aufgaben gehören insbesondere (aber nicht ausschließlich) die Vorverarbeitung, Nachverarbeitung, Auswertung und/oder Kontrolle von Daten und/oder Signalen sowie die Veranlassung und Überwachung der Kooperation der über die SLE-Schicht 12 verbundenen Einrichtungen.

Läßt man die Konfiguration oder eine Umkonfiguration der SLE-Schicht 12 jederzeit zu, so können diese Aufgaben sogar dynamisch in die SLE-Schicht ausgelagert werden.

Unabhängig davon, also selbst dann, wenn keine dynamische Konfigurierung der SLE-Schicht 12 möglich ist, kann der µP-Core 11 durch die SLE-Schicht 12 beträchtlich entlastet werden. Dies wird nachfolgend anhand eines praktischen Beispiels erläutert.

Das Beispiel betrifft eine Analog/Digital-Wandlung von Daten. Genauer gesagt soll
- ein A/D-Wandler (beispielsweise der A/D-Wandler 15) mit einer Wandlungsbreite von 8 Bit von einem Timer (beispielsweise vom Timer 17) gestartet werden,
- das Ergebnis der A/D-Wandlung zusammen mit einer 12-Bit-Zählmarke gespeichert werden,
- das Ergebnis der A/D-Wandlung auf das Über- und Unterschreiten bestimmter Grenzwerte überwacht werden, wobei bei einem Ober- oder Unterschreiten der Grenzwerte in eine bestimmte Routine zu verzweigen ist,
- und der Vorgang nach 2048 Messungen abgebrochen werden.

Eine derartige Anwendung erfordert bei einer reinen Softwarelösung einen relativ hohen Aufwand. Da ein typischer A/D-Wandler, der in einem Mikrocontroller integriert ist, nicht spontan das Ergebnis liefert, also als sogenannter Flash-Wandler arbeitet und eine Wandlungszeit im Bereich einiger Mikrosekunden besitzt, muß bei exakter Ausführung der Anwendungsspezifikation einer der folgenden Wege beschritten werden:
1) Der Timer löst einen Interrupt aus. Die Interrupt-Serviceroutine startet die A/D-Wandlung und wird dann beendet. Der A/D-Wandler löst bei Beendigung der Wandlung ebenfalls einen Interrupt aus. Durch die daraufhin ausgeführte Interrupt-Serviceroutine wird das A/D-Wandlungsergebnis ausgelesen und verarbeitet.
2) Der Timer löst einen Interrupt aus. In der daraufhin ausgeführten Interrupt-Serviceroutine wird die A/D-Wandlung gestartet, auf das Wandlungsende gewartet, und schließlich (nach dem Wandlungsende) das A/D-Wandlungsergebnis ausgelesen und verarbeitet.
   Wenn die Wandlungszeiten kürzer als die Interrupt-Latenzzeiten sind, ist der zweiten Variante der Vorzug zu geben. Ansonsten wäre die erste Variante zu bevorzugen. Am günstigsten ist jedoch im allgemeinen die folgende dritte Variante:
3) Der Timer löst einen Interrupt aus. In der daraufhin ausgeführten Interrupt-Serviceroutine wird das letzte A/D-Wandlungsergebnis ausgelesen, die nächste A/D-Wandlung gestartet, und das ausgelesene A/D-Wandlungsergebnis ausgewertet.

Bei dieser dritten Variante erfolgt das Lesen und Auswerten des A/D-Wandlungsergebnis zwar in der Regel später als es eigentlich möglich wäre. Diese Verzögerung ist jedoch im allgemeinen tolerierbar.

Der Aufwand, der zur praktischen Realisierung der dritten Variante zu treiben ist, ist zweifellos am geringsten. Nichtsdestotrotz dauert die Abarbeitung der durch den Timer-Interrupt zur Ausführung gebrachten Interrupt-Serviceroutine mindestens (d.h. wenn ein Befehl pro Takt ausgeführt wird und wenn keine Über- oder Unterschreitungen der Grenzwerte durch die A/D-Wandlungsergebnisse auftreten und wenn keine Interrupt-Latenzzeiten vorhanden wären) 30 Takte.

Verlagert man die Ausführung dieser Anwendung so weit wie möglich in die SLE-Schicht 12, so läßt sie sich erheblich schneller durchführen.

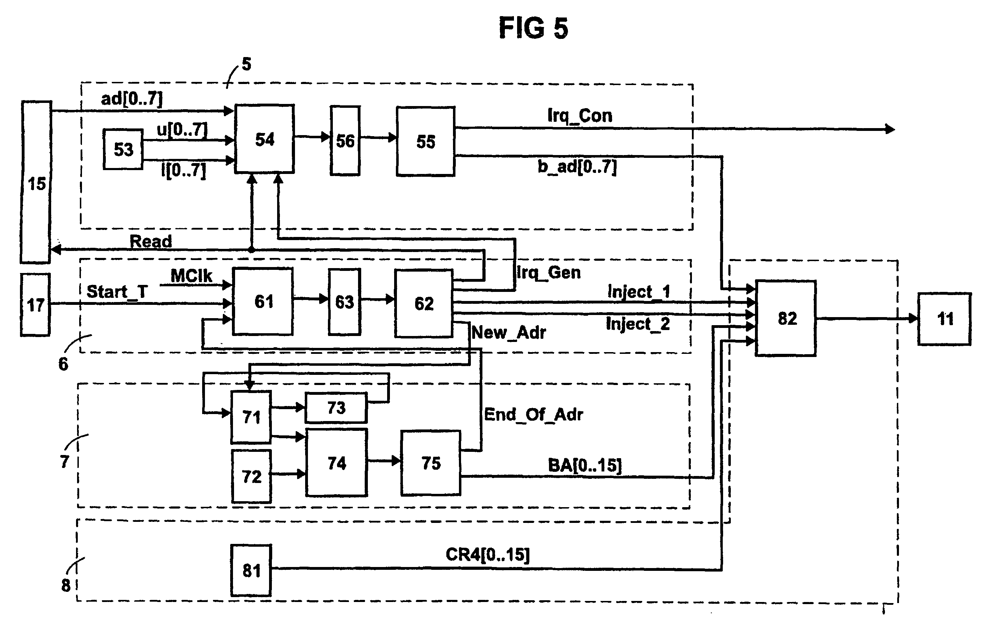

Der in der Figur 4 gezeigte und unter Bezugnahme darauf beschriebene Logikblock ist dann beispielsweise so zu konfigurieren, daß die in Figur 5 gezeigte Struktur entsteht.

Die Eingangssignale der in der Figur 5 gezeigten Anordnung sind die mit ad[0..7] bezeichneten A/D-Wandlungsergebnisse des A/D-Wandlers 15 sowie die mit Start_T bezeichneten Impulse des Timers 17.

Die strukturierbaren Elemente des Logikblocks gemäß Figur 5, werden so konfiguriert, daß dieser bei einem Über- oder Unterschreiten der Grenzwerte durch die A/D-Wandlungsergebnisse und bei Erreichen des Endes der Meßreihe mit Irq-Con bezeichnete Interrupt Requests absetzt und zum Speichern der A/D-Wandlungsergebnisse zusammen mit der Zählmarke entsprechende Befehle in die Befehls-Pipeline des µP-Core injiziert. Dabei obliegt
- dem zweiten Sub-Block 6 die zentrale Ablaufsteuerung innerhalb des betreffenden Logikblocks,
- dem ersten Sub-Block 5 der Vergleich der vom A/D-Wandler 15 erhaltenen A/D-Wandlungsdaten ad[0..7] mit im Konstantenregister 53 gespeicherten Werten u[0..7] (oberer Grenzwert) und 1[0..7] (unterer Grenzwert) und die Erzeugung der Interrupt Requests Irq_Con,
- dem dritten Sub-Block 7 der Vergleich von Adressen (zur Vervollständigung der zu injizierenden Befehle und zur Ermittlung des Endes der Meßreihe), und
- dem vierten Sub-Block 8 die Generierung bzw. Zusammenstellung und die Injizierung der zu injizierenden Befehle.

Die strukturierbaren Logiken 61 und 62 sind dabei so konfiguriert, daß sie basierend auf Eingangssignalen MClk, Start_T, End_Of_Adr und Reset unter Verwendung von internen Signalen S0, S1, S2 und End_Reached wie durch die folgenden Boolschen Gleichungen definiert Ausgangssignale Irq_Gen, Inject_1, Inject_2, New_Adr und Read erzeugt:
In der strukturierbaren Logik 61: 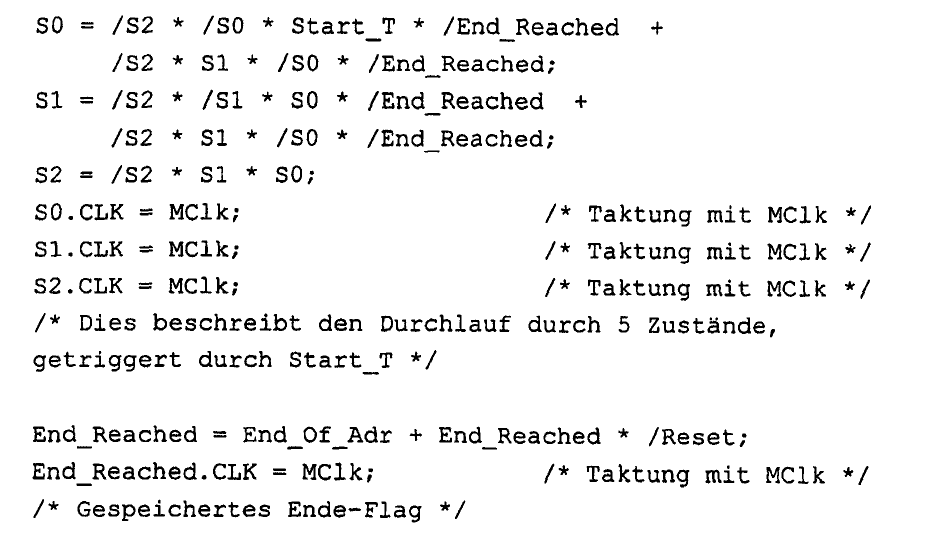
In der strukturierbaren Logik 62:

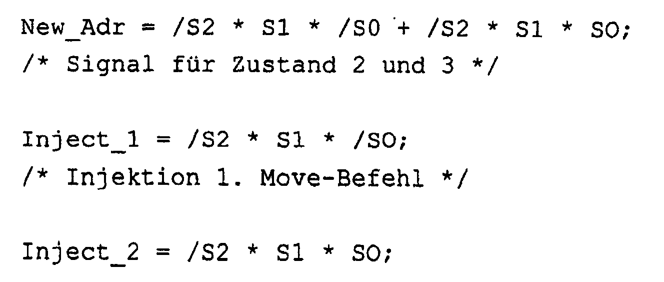

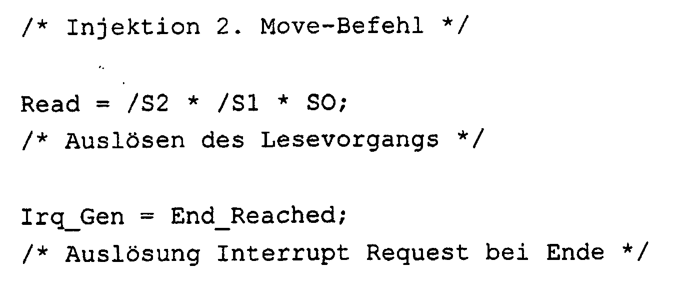

Die strukturierbaren Logiken 54 und 55 sind so konfiguriert, daß sie basierend auf Eingangssignalen ad[O..7], u[O..7], 1[0..7], Read, Irq_Gen unter Verwendung von internen Signalen tmp_upper[0..3], tmp_lower[O..3], tmp_eq[O..3] (für Zwischenergebnisse), tmp_ad[O..7] (für Zwischenspeicherung nach Abfrage) und Irq_Tmp1 (für IRQ-Generierung und Rücksetzen) wie durch die folgenden Boolschen Gleichungen definiert Ausgangssignale Irq_Con1, Irq_Con2, b_ad[O..7] erzeugt:
In der strukturierbaren Logik 54: 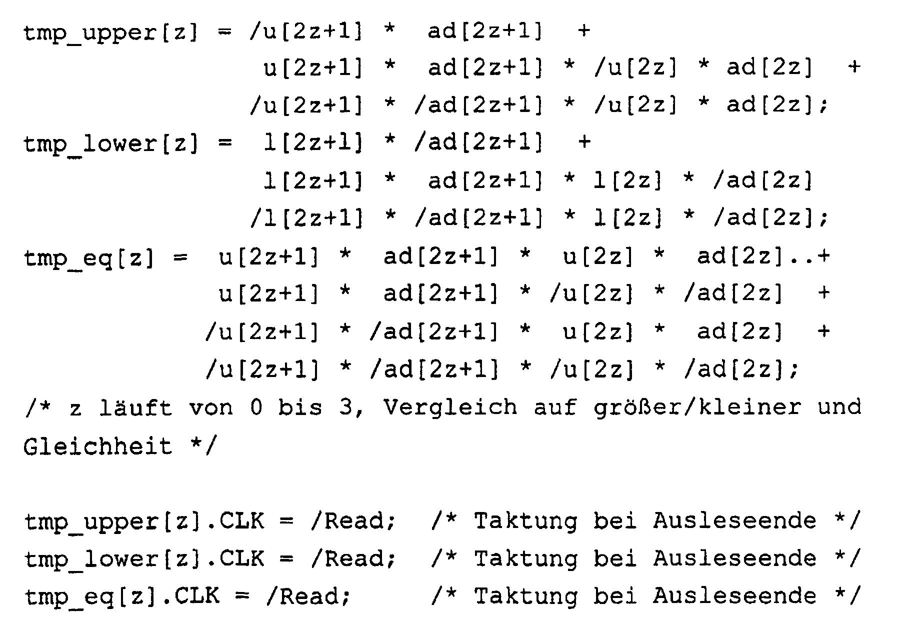 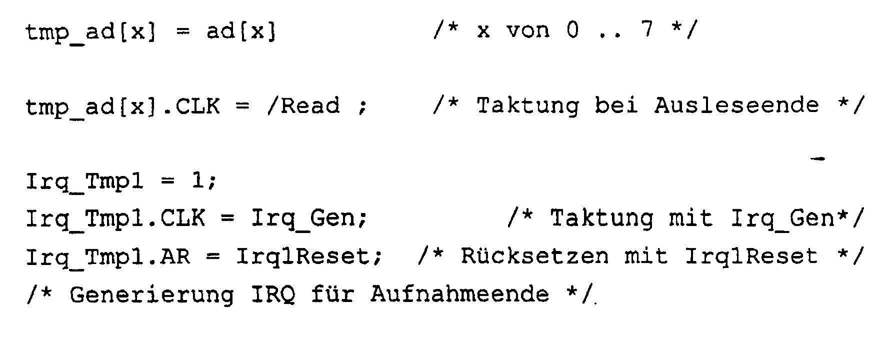
In der strukturierbaren Logik 55:

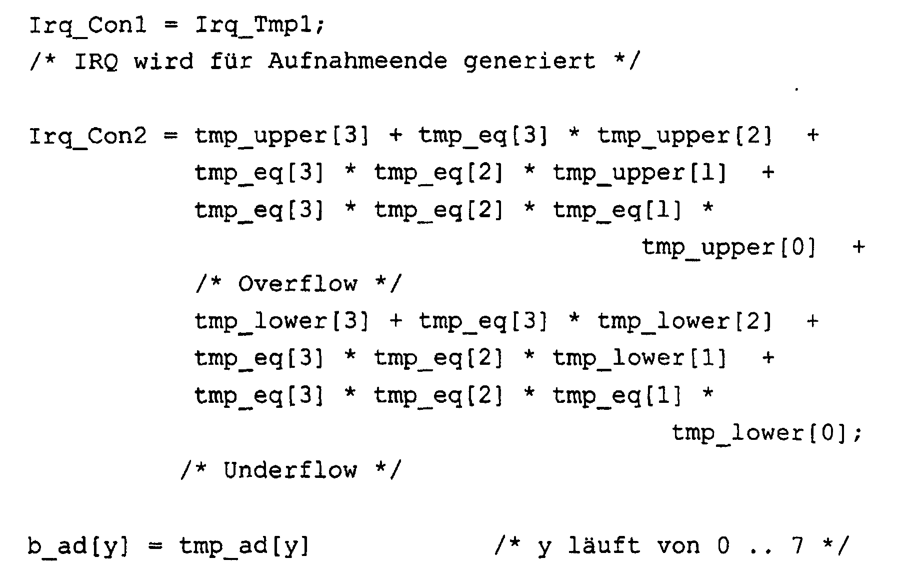

Die strukturierbaren Logiken 74 und 75 sind so konfiguriert, daß sie basierend auf Eingangssignalen A[O..15], EA[O..15] unter Verwendung von internen Signalen temp[O..7] wie durch die folgenden Boolschen Gleichungen definiert Ausgangssignale End_Adr und BA[O..15] erzeugt:
In der strukturierbaren Logik 74: 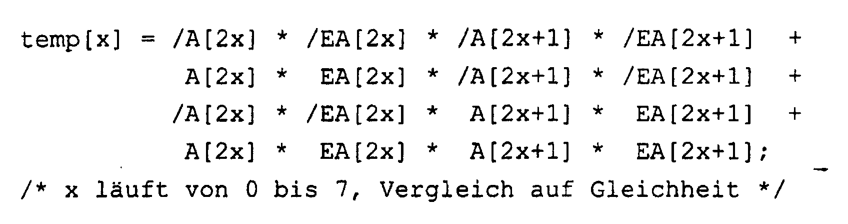
In der strukturierbaren Logik 75:

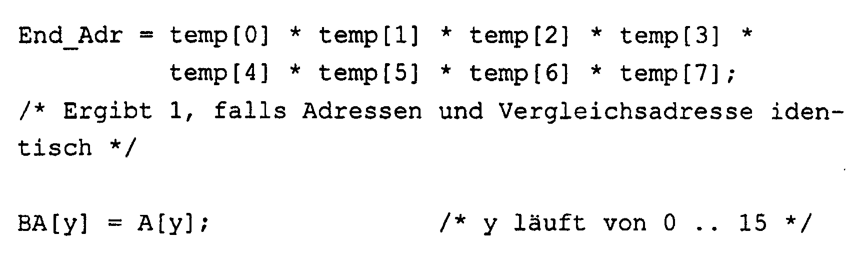

Die strukturierbare Logik 82 ist so konfiguriert, daß sie basierend auf Eingangssignalen Inject_1, Inject_2, BA[O..15], b_ad[0..7], und CR4[0..15] wie durch die folgenden Boolschen Gleichungen definiert Ausgangssignale Inject und MP[O..31] (angenommenes 32-Bit-Interface zum µP-Core) erzeugt:

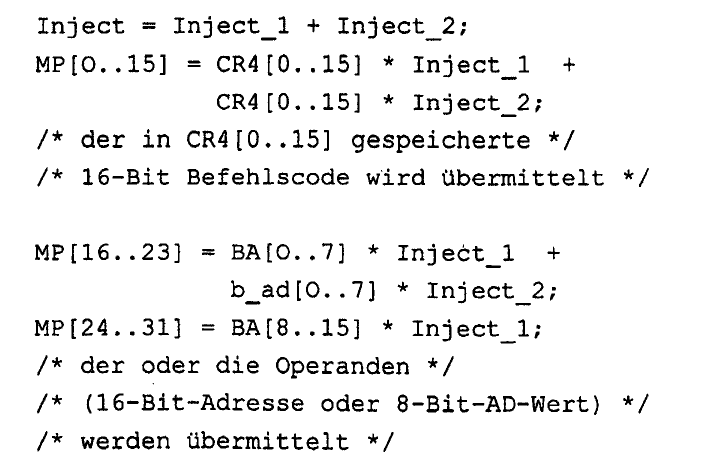

Wie sich aus den vorstehenden Ausführungen ergibt, durchläuft die Anordnung gemäß Figur 5 bei jedem Auslesen und Verarbeiten von A/D-Wandlungsdaten aus dem A/D-Wandler vier Zustände, nämlich
1) Lesen des A/D-Wandlungsergebnisses ad[0..7] aus dem A/D-Wandler mit automatischem Neustart des A/D-Wandlers.
2) Das A/D-Wandlungsergebnis wird verarbeitet, d.h. das A/D-Wandlungsergebnis wird mit einem im Konstantenspeicher 53 gespeicherten oberen Grenzwert u[0..7] und einem ebenfalls im Konstantenspeicher gespeicherten unteren Grenzwert 1[0..7] verglichen. Zugleich wird ein erster Move-Befehl in die Pipeline des µP-Core injiziert.
3) Ein zweiter Move-Befehl wird injiziert. Dieser besteht aus einem Transfer des A/D-Wandlungsergebnisses auf die inzwischen inkrementierte Adresse. Wenn das A/D-Wandlungsergebnis außerhalb des durch die Grenzwerte definierten Bereiches liegt, wird gleichzeitig ein Interrupt Request ausgelöst.
4) Eventuell wird das Ende der 2048 Wandlungen erreicht. In diesem Fall wird ein Flag gesetzt, das ein weiteres Auslesen und Verarbeiten von A/D-Wandlungsergebnissen verhindert. Weiterhin wird zur Signalisierung des Endes der Routine ein weiterer Interrupt Request ausgelöst.

Geht man davon aus, daß jeder Zustand genau einen Ablauftakt benötigt, so werden für jedes Auslesen und Verarbeiten von A/D-Wandlungsdaten aus dem A/D-Wandler 4 Takte benötigt; der µP-Core wird durch die injizierten Befehle zeitlich mit zwei oder drei CPU-Takten belastet.

Das vorliegend betrachtete Lesen und Auswerten von A/D-Wandlungsergebnissen läßt sich bei Miteinbeziehung der SLE-Schicht 12 in einem kleinen Bruchteil der Zeit durchführen, die nötig wäre, wenn man wie bislang vorgehen würde, also die komplette Ablaufsteuerung und Datenverarbeitung im wesentlichen ausschließlich dem µP-Core 11 überlassen würde.

Selbstverständlich lassen sich auch bei gänzlich anderen Anwendungen als dem vorstehend beschriebenen Beispiel ähnliche Vorteile erzielen.

Die beschriebene programmgesteuerte Einheit ist dadurch für eine große Anzahl unterschiedlichster Anwendungsfälle jeweils optimal einsetzbar.

## Patentansprüche

1. Programmgesteuerte Einheit mit einer oder mehreren applikationsspezifisch konfigurierbaren intelligenten Schnittstellen,
- wobei die mindestens eine applikationsspezifisch konfigurierbare intelligente Schnittstelle durch eine strukturierbare Hardware (12) gebildet wird,
- wobei die strukturierbare Hardware (12) als konfigurierbare intelligente Schnittstelle zwischen einem auszuführende Befehle abarbeitenden intelligenten Kern (11) der programmgesteuerten Einheit (1) und innerhalb oder außerhalb der programmgesteuerten Einheit vorgesehenen Peripherie-Einheiten (13 bis 19) und/oder zwischen dem intelligenten Kern (11) und einer oder mehreren Speichereinrichtungen (2, 3) und/oder zwischen zwei oder mehreren Peripherie-Einheiten (13 bis 19) untereinander und/oder zwischen einer oder mehreren Peripherie-Einheiten (13 bis 19) und einer oder mehreren Speichereinrichtungen (2, 3) konfigurierbar ist, **dadurch gekennzeichnet, daß**
- die strukturierbare Hardware (12) in der Lage ist, erhaltene Daten und/oder Signale auszuwerten und/oder zu verarbeiten.

2. Programmgesteuerte Einheit mit einer oder mehreren applikationsspezifisch konfigurierbaren intelligenten Schnittstellen,
- wobei die mindestens eine applikationsspezifisch konfigurierbare intelligente Schnittstelle durch eine strukturierbare Hardware (12) gebildet wird,
- wobei die strukturierbare Hardware (12) als konfigurierbare intelligente Schnittstelle zwischen einem auszuführende Befehle abarbeitenden intelligenten Kern (11) der programmgesteuerten Einheit (1) und innerhalb oder außerhalb der programmgesteuerten Einheit vorgesehenen Peripherie-Einheiten (13 bis 19) und/oder zwischen dem intelligenten Kern (11) und einer oder mehreren Speichereinrichtungen (2, 3) und/oder zwischen zwei oder mehreren Peripherie-Einheiten (13 bis 19) untereinander und/oder zwischen einer oder mehreren Peripherie-Einheiten (13 bis 19) und einer oder mehreren Speichereinrichtungen (2, 3) konfigurierbar ist, **dadurch gekennzeichnet, daß**
die strukturierbare Hardware (12) in der Lage ist, Befehle in die Befehls-Pipeline des die auszuführenden Befehle abarbeitenden intelligenten Kerns (11) der programmgesteuerten Einheit zu injizieren.

3. Programmgesteuerte Einheit mit einer oder mehreren applikationsspezifisch konfigurierbaren intelligenten Schnittstellen,
- wobei die mindestens eine applikationsspezifisch konfigurierbare intelligente Schnittstelle durch eine strukturierbare Hardware (12) gebildet wird,
- wobei die strukturierbare Hardware (12) als konfigurierbare intelligente Schnittstelle zwischen einem auszuführende Befehle abarbeitenden intelligenten Kern (11) der programmgesteuerten Einheit (1) und innerhalb oder außerhalb der programmgesteuerten Einheit vorgesehenen Peripherie-Einheiten (13 bis 19) und/oder zwischen dem intelligenten Kern (11) und einer oder mehreren Speichereinrichtungen (2, 3) und/oder zwischen zwei oder mehreren Peripherie-Einheiten (13 bis 19) untereinander und/oder zwischen einer oder mehreren Peripherie-Einheiten (13 bis 19) und einer oder mehreren Speichereinrichtungen (2, 3) konfigurierbar ist, **dadurch gekennzeichnet, daß**
- die strukturierbare Hardware (12) in der Lage ist, Interrupt Requests oder sonstige Ereignisse signalisierende Meldungen zu generieren und auszugeben.

4. Programmgesteuerte Einheit mit einer oder mehreren applikationsspezifisch konfigurierbaren intelligenten Schnittstellen,
- wobei die mindestens eine applikationsspezifisch konfigurierbare intelligente Schnittstelle durch eine strukturierbare Hardware (12) gebildet wird,
- wobei die strukturierbare Hardware (12) als konfigurierbare intelligente Schnittstelle zwischen einem auszuführende Befehle abarbeitenden intelligenten Kern (11) der programmgesteuerten Einheit (1) und innerhalb oder außerhalb der programmgesteuerten Einheit vorgesehenen Peripherie-Einheiten (13 bis 19) und/oder zwischen dem intelligenten Kern (11) und einer oder mehreren Speichereinrichtungen (2, 3) und/oder zwischen zwei oder mehreren Peripherie-Einheiten (13 bis 19) untereinander und/oder zwischen einer oder mehreren Peripherie-Einheiten (13 bis 19) und einer oder mehreren Speichereinrichtungen (2, 3) konfigurierbar ist, **dadurch gekennzeichnet, daß**
- die strukturierbare Hardware (12) in der Lage ist, auf Interrupt Requests oder sonstige Ereignisse signalisierende Meldungen von mit ihr verbundenen Einrichtungen zu reagieren und/oder deren Weiterleitung zu unterbinden.

5. Programmgesteuerte Einheit nach einem der vorhergehenden Ansprüche,
**dadurch gekennzeichnet,**
**daß** die strukturierbare Hardware (12) schaltungsmäßig zwischen dem intelligenten Kern (11) der programmgesteuerten Einheit (1), den Peripherie-Einheiten (13 bis 19) und/oder den Speichereinrichtungen (2, 3) angeordnet ist.

6. Programmgesteuerte Einheit nach einem der vorhergehenden Ansprüche,
**dadurch gekennzeichnet,**
**daß** die strukturierbare Hardware (12) mit einer Vielzahl von möglichen Daten- und/oder Signalquellen und Daten- und/oder Signalzielen verbunden ist, und daß Multiplexer (51, 52, 64) zur Auswahl der aktuellen Daten- und/oder Signalquellen und der aktuellen Daten- und/oder Signalziele vorgesehen sind.

7. Programmgesteuerte Einheit nach Anspruch 6,
**dadurch gekennzeichnet,**
**daß** die Daten- und/oder Signalquellen und die Daten- und/oder Signalziele den intelligenten Kern (11), die Peripherie-Einheiten (13 bis 19), die Speichereinrichtungen (2, 3) und/oder Teile der strukturierbaren Hardware (12) selbst enthaltene Einheiten umfassen.

8. Programmgesteuerte Einheit nach einem der vorhergehenden Ansprüche,
**dadurch gekennzeichnet,**
**daß** durch die Strukturierung der strukturierbaren Hardware (12) Datenpfade veränderbar und/oder Logikelemente konfigurierbar sind.

9. Programmgesteuerte Einheit nach einem der vorhergehenden Ansprüche,
**dadurch gekennzeichnet,**
**daß** die strukturierbare Hardware (12) eine Taktgenerierungs-Einheit (121) und eine Logikblock-Einheit (122) umfaßt, wobei es der Taktgenerierungs-Einheit (121) obliegt, ein oder mehrere Taktsignale (OUTCLK, MClk) für die Logikblock-Einheit (122) zu generieren, und wobei es der Logikblock-Einheit (122) obliegt, über die strukturierbare Hardware (12) zu verbindende Einrichtungen wunschgemäß kooperieren zu lassen.

10. Programmgesteuerte Einheit nach Anspruch 9,
**dadurch gekennzeichnet,**
**daß** sowohl die Taktgenerierungs-Einheit (121) als auch die Logikblock-Einheit (122) konfigurierbare Elemente enthalten.

11. Programmgesteuerte Einheit nach Anspruch 9 oder 10,
**dadurch gekennzeichnet,**
**daß** die Taktgenerierungs-Einheit (121) zumindest teilweise durch eine DNF-Logik, ein NAND-Array, eine multiplexer-basierte Logikvariante oder eine sonstige strukturierbare Logik gebildet wird.

12. Programmgesteuerte Einheit nach einem der Ansprüche 9 bis 11,
**dadurch gekennzeichnet,**
**daß** die Logikblock-Einheit (122) zumindest teilweise durch eine DNF-Logik, ein NAND-Array, eine multiplexer-basierte Logikvariante oder eine sonstige strukturierbare Logik gebildet wird.

13. Programmgesteuerte Einheit nach einem der Ansprüche 9 bis 12,
**dadurch gekennzeichnet,**
**daß** die Logikblock-Einheit (122) ein oder mehrere Logikblöcke umfaßt, die zumindest teilweise in individuell konfigurierbare Sub-Blöcke (5 bis 8) mit vorbestimmten Aufgaben unterteilt sind.

14. Programmgesteuerte Einheit nach Anspruch 13,
**dadurch gekennzeichnet,**
**daß** einer der Sub-Blöcke (5 bis 8) dazu ausgelegt ist, als Verarbeitungseinrichtung zur arithmetischen und/oder logischen Verarbeitung eingegebener Daten verwendet zu werden.

15. Programmgesteuerte Einheit nach Anspruch 13 oder 14,
**dadurch gekennzeichnet,**
**daß** einer der Sub-Blöcke (5 bis 8) dazu ausgelegt ist, als Statemachine zur zentralen Ablaufsteuerung verwendet zu werden.

16. Programmgesteuerte Einheit nach einem der Ansprüche 13 bis 15,
**dadurch gekennzeichnet,**
**daß** einer der Sub-Blöcke (5 bis 8) dazu ausgelegt ist, als Adreßberechnungseinrichtung zur Berechnung von Quellen- und Zieladressen verwendet zu werden.

17. Programmgesteuerte Einheit nach einem der Ansprüche 13 bis 16,
**dadurch gekennzeichnet,**
**daß** einer der Sub-Blöcke (5 bis 8) dazu ausgelegt ist, als Befehlsinjektionseinrichtung zur Injektion von Befehlen in die Befehls-Pipeline des intelligenten Kerns (11) der programmgesteuerten Einheit verwendet zu werden.

18. Programmgesteuerte Einheit nach einem der vorhergehenden Ansprüche,
**dadurch gekennzeichnet,**
**daß** die strukturierbare Hardware (12) unter Verwendung von Fuses und/oder Anti-Fuses konfigurierbar ist.

19. Programmgesteuerte Einheit nach einem der vorhergehenden Ansprüche,
**dadurch gekennzeichnet,**
**daß** die strukturierbare Hardware (12) durch reversible Maßnahmen konfigurierbar ist.

20. Programmgesteuerte Einheit nach Anspruch 19,
**dadurch gekennzeichnet,**
**daß** die strukturierbare Hardware (12) basierend auf die gewünschte Konfiguration repräsentierenden Daten konfigurierbar ist, und daß diese Daten in Speichereinrichtungen gespeichert sind, die in den durch den intelligenten Kern (11) der programmgesteuerten Einheit ansprechbaren Speicher- oder I/O-Bereich einblendbar sind.

21. Programmgesteuerte Einheit nach einem der vorhergehenden Ansprüche,
**dadurch gekennzeichnet,**
**daß** die Konfigurierung der strukturierbaren Hardware (12) nur zu vorbestimmten Zeiten möglich ist.

22. Programmgesteuerte Einheit nach einem der Ansprüche 1 bis 20,
**dadurch gekennzeichnet,**
**daß** die Konfigurierung der strukturierbaren Hardware (12) jederzeit möglich ist.

## Claims

1. Program-controlled unit having one or more intelligent interfaces which can be configured on an application-specific basis,
- where the at least one intelligent interface which can be configured on an application-specific basis is formed by structurable hardware (12),
- where the structurable hardware (12) can be configured as a configurable intelligent interface between an intelligent core (11) of the program-controlled unit (1), which core processes commands which are to be executed, and peripheral units (13 to 19) provided inside or outside the program-controlled unit and/or between the intelligent core (11) and one or more memory devices (2, 3) and/or between two or more peripheral units (13 to 19), among one another, and/or between one or more peripheral units (13 to 19) and one or more memory devices (2, 3), **characterized in that**
- the structurable hardware (12) is able to evaluate and/or process received data and/or signals.

2. Program-controlled unit having one or more intelligent interfaces which can be configured on an application-specific basis,
- where the at least one intelligent interface which can be configured on an application-specific basis is formed by structurable hardware (12),
- where the structurable hardware (12) can be configured in the form of a configurable intelligent interface between an intelligent core (11) of the program-controlled unit (1), which core processes commands which are to be executed, and peripheral units (13 to 19) provided inside or outside the program-controlled unit and/or between the intelligent core (11) and one or more memory devices (2, 3) and/or between two or more peripheral units (13 to 19), among one another, and/or between one or more peripheral units (13 to 19) and one or more memory devices (2, 3), **characterized in that** the structurable hardware (12) is able to inject commands into the command pipeline of the program-controlled unit's intelligent core (11) which processes commands which are to be executed.

3. Program-controlled unit having one or more intelligent interfaces which can be configured on an application-specific basis,
- where the at least one intelligent interface which can be configured on an application-specific basis is formed by structurable hardware (12),
- where the structurable hardware (12) can be configured as a configurable intelligent interface between an intelligent core (11) of the program-controlled unit (1), which core processes commands which are to be executed, and peripheral units (13 to 19) provided inside or outside the program-controlled unit and/or between the intelligent core (11) and one or more memory devices (2, 3) and/or between two or more peripheral units (13 to 19), among one another, and/or between one or more peripheral units (13 to 19) and one or more memory devices (2, 3), **characterized in that** the structurable hardware (12) is able to generate and output interrupt requests or messages signalling other events.

4. Program-controlled unit having one or more intelligent interfaces which can be configured on an application-specific basis,
- where the at least one intelligent interface which can be configured on an application-specific basis is formed by structurable hardware (12),
- where the structurable hardware (12) can be configured as a configurable intelligent interface between an intelligent core (11) of the program-controlled unit (1), which core processes commands which are to be executed, and peripheral units (13 to 19) provided inside or outside the program-controlled unit and/or between the intelligent core (11) and one or more memory devices (2, 3) and/or between two or more peripheral units (13 to 19), among one another, and/or between one or more peripheral units (13 to 19) and one or more memory devices (2, 3), **characterized in that** the structurable hardware (12) is able to react to and/or prevent forwarding of interrupt requests or messages signalling other events from devices connected to it.

5. Program-controlled unit according to one of the preceding claims, **characterized**
**in that** the circuitry of the structurable hardware (12) is arranged between the intelligent core (11) of the program-controlled unit (1), the peripheral units (13 to 19) and/or the memory devices (2, 3).

6. Program-controlled unit according to one of the preceding claims, **characterized**
**in that** the structurable hardware (12) is connected to a multiplicity of possible data and/or signal sources and data and/or signal destinations, and in that multiplexers (51, 52, 64) are provided for selecting the current data and/or signal sources and the current data and/or signal destinations.

7. Program-controlled unit according to Claim 6,
**characterized**
**in that** the data and/or signal sources and the data and/or signal destinations comprise the intelligent core (11), the peripheral units (13 to 19), the memory devices (2, 3) and/or units which contain parts of the structurable hardware (12) itself.

8. Program-controlled unit according to one of the preceding claims,
**characterized**
**in that** the structuring of the structurable hardware (12) allows data paths to be altered and/or logic elements to be configured.

9. Program-controlled unit according to one of the preceding claims,
**characterized**
**in that** the structurable hardware (12) comprises a clock generation unit (121) and a logic block unit (122), where it is the task of the clock generation unit (121) to generate one or more clock signals (OUTCLK, MClk) for the logic block unit (122), and where it is the task of the logic block unit (122) to allow cooperation as desired between devices which are to be connected by means of the structurable hardware (12).

10. Program-controlled unit according to Claim 9,
**characterized**
**in that** both the clock generation unit (121) and the logic block unit (122) contain configurable elements.

11. Program-controlled unit according to Claim 9 or 10,
**characterized**
**in that** the clock generation unit (121) is formed at least in part by a DNF logic unit, a NAND array, a multiplexer-based logic variant or another structurable logic unit.

12. Program-controlled unit according to one of Claims 9 to 11,
**characterized**
**in that** the logic block unit (122) is formed at least in part by a DNF logic unit, a NAND array, a multiplexer-based logic variant or another structurable logic unit.

13. Program-controlled unit according to one of Claims 9 to 12,
**characterized**
**in that** the logic block unit (122) comprises one or more logic blocks, at least some of which are divided into individually configurable subblocks (5 to 8) having predetermined tasks.

14. Program-controlled unit according to Claim 13,
**characterized**
**in that** one of the subblocks (5 to 8) is designed to be used as a processing device for arithmetic and/or logical processing of entered data.

15. Program-controlled unit according to one of Claims 13 and 14,
**characterized**
**in that** one of the subblocks (5 to 8) is designed to be used as a state machine for central flow control.

16. Program-controlled unit according to one of Claims 13 to 15,
**characterized**
**in that** one of the subblocks (5 to 8) is designed to be used as an address calculation device for calculating source and destination addresses.

17. Program-controlled unit according to one of Claims 13 to 16,
**characterized**
**in that** one of the subblocks (5 to 8) is designed to be used as command injection device for injecting commands into the command pipeline of the program-controlled unit's intelligent core (11).

18. Program-controlled unit according to one of the preceding claims,
**characterized**
**in that** the structurable hardware (12) can be configured using fuses and/or antifuses.

19. Program-controlled unit according to one of the preceding claims,
**characterized**
**in that** the structurable hardware (12) can be configured using reversible measures.

20. Program-controlled unit according to Claim 19,
**characterized**
**in that** the structurable hardware (12) can be configured on the basis of data representing the desired configuration, and
**in that** these data are stored in memory devices which can be inserted into the memory or I/O area which can be addressed by the program-controlled unit's intelligent core (11).

21. Program-controlled unit according to one of the preceding claims,
**characterized**
**in that** the structurable hardware (12) can be configured only at predetermined times.

22. Program-controlled unit according to one of Claims 1 to 20,
**characterized**
**in that** the structurable hardware (12) can be configured at any time.

## Revendications

1. Module logique programmable comprenant une ou plusieurs interfaces intelligentes pouvant être configurées spécifiquement en fonction de l'application
- l'au moins une interface intelligente configurable spécifiquement en fonction de l'application étant réalisée par un matériel (12) structurable,
- le matériel structurable (12) pouvant être configuré sous la forme d'une interface intelligente configurable entre un noyau intelligent (11) du module programmable (1) qui traite les instructions à exécuter et les modules périphériques (13 à 19) prévus à l'intérieur ou à l'extérieur du module programmable et/ou entre le noyau intelligent (11) et un ou plusieurs dispositifs de mémorisation (2, 3) et/ou entre deux modules périphériques (13 à 19) ou plus entre eux et/ou entre un ou plusieurs modules périphériques (13 à 19) et un ou plusieurs dispositifs de mémorisation (2, 3), **caractérisé en ce que** le matériel structurable (12) est en mesure d'analyser et/ou de traiter les données et/ou les signaux obtenus.

2. Module logique programmable comprenant une ou plusieurs interfaces intelligentes pouvant être configurées spécifiquement en fonction de l'application
- l'au moins une interface intelligente configurable spécifiquement en fonction de l'application étant réalisée par un matériel (12) structurable,
- le matériel structurable (12) pouvant être configuré sous la forme d'une interface intelligente configurable entre un noyau intelligent (11) du module programmable (1) qui traite les instructions à exécuter et les modules périphériques (13 à 19) prévus à l'intérieur ou à l'extérieur du module programmable et/ou entre le noyau intelligent (11) et un ou plusieurs dispositifs de mémorisation (2, 3) et/ou entre deux modules périphériques (13 à 19) ou plus entre eux et/ou entre un ou plusieurs modules périphériques (13 à 19) et un ou plusieurs dispositifs de mémorisation (2, 3), **caractérisé en ce que** le matériel structurable (12) est en mesure d'injecter des instructions dans le pipeline à instructions du noyau intelligent (11) du module programmable qui traite les instructions à exécuter.

3. Module logique programmable comprenant une ou plusieurs interfaces intelligentes pouvant être configurées spécifiquement en fonction de l'application
- l'au moins une interface intelligente configurable spécifiquement en fonction de l'application étant réalisée par un matériel (12) structurable,
- le matériel structurable (12) pouvant être configuré sous la forme d'une interface intelligente configurable entre un noyau intelligent (11) du module programmable (1) qui traite les instructions à exécuter et les modules périphériques (13 à 19) prévus à l'intérieur ou à l'extérieur du module programmable et/ou entre le noyau intelligent (11) et un ou plusieurs dispositifs de mémorisation (2, 3) et/ou entre deux modules périphériques (13 à 19) ou plus entre eux et/ou entre un ou plusieurs modules périphériques (13 à 19) et un ou plusieurs dispositifs de mémorisation (2, 3), **caractérisé en ce que** le matériel structurable (12) est en mesure de générer et de délivrer des messages signalant des demandes d'interruption ou d'autres événements divers.

4. Module logique programmable comprenant une ou plusieurs interfaces intelligentes pouvant être configurées spécifiquement en fonction de l'application
- l'au moins une interface intelligente configurable spécifiquement en fonction de l'application étant réalisée par un matériel (12) structurable,
- le matériel structurable (12) pouvant être configuré sous la forme d'une interface intelligente configurable entre un noyau intelligent (11) du module programmable (1) qui traite les instructions à exécuter et les modules périphériques (13 à 19) prévus à l'intérieur ou à l'extérieur du module programmable et/ou entre le noyau intelligent (11) et un ou plusieurs dispositifs de mémorisation (2, 3) et/ou entre deux modules périphériques (13 à 19) ou plus entre eux et/ou entre un ou plusieurs modules périphériques (13 à 19) et un ou plusieurs dispositifs de mémorisation (2, 3), **caractérisé en ce que** le matériel structurable (12) est en mesure de réagir aux messages signalant des demandes d'interruption ou d'autres événements divers en provenance des dispositifs qui sont reliés avec lui et/ou empêchent leur transmission.

5. Module programmable selon l'une des revendications précédentes, **caractérisé en ce que** le matériel structurable (12) est disposé dans le circuit entre le noyau intelligent (11) du module programmable (1), les modules périphériques (13 à 19) et/ou les dispositifs de mémorisation (2, 3).

6. Module programmable selon l'une des revendications précédentes, **caractérisé en ce que** le matériel structurable (12) est relié à un grand nombre de sources possibles de données et/ou de signaux et de destinations possibles des données et/ou des signaux, et que des multiplexeurs (51, 52, 64) sont prévus pour sélectionner les sources actuelles de données et/ou de signaux et destinations actuelles des données et/ou des signaux.

7. Module programmable selon la revendication 6,
**caractérisé en ce que** les sources de données et/ou de signaux et les destinations des données et/ou des signaux englobent le noyau intelligent (11), les modules périphériques (13 à 19), les dispositifs de mémorisation (2, 3) et/ou des parties des modules inclus dans le matériel structurable (12) lui-même.

8. Module programmable selon l'une des revendications précédentes, **caractérisé en ce que** le fait de structurer le matériel structurable (12) permet de modifier les chemins de données et/ou de configurer les éléments logiques.

9. Module programmable selon l'une des revendications précédentes, **caractérisé en ce que** le matériel structurable (12) comprend un module générateur d'horloge (121) et un module de bloc logique (122), le module générateur d'horloge (121) ayant pour tâche de générer un ou plusieurs signaux d'horloge (OUTCLK, MClk) pour le module de bloc logique (122), et le module de bloc logique (122) ayant pour tâche d'assurer la coopération de la manière souhaitée des dispositifs à relier par le biais du matériel structurable (12).

10. Module programmable selon la revendication 9, **caractérisé en ce que** le module générateur d'horloge (121) et le module de bloc logique (122) contiennent tous deux des éléments configurables.

11. Module programmable selon la revendication 9 ou 10, **caractérisé en ce que** le module générateur d'horloge (121) est formé au moins en partie par un circuit logique DNF, un réseau de portes NAND, une variante de circuit logique à base de multiplexeurs ou un autre circuit logique structurable.

12. Module programmable selon l'une des revendications 9 à 11, **caractérisé en ce que** le module de bloc logique (122) est formé au moins en partie par un circuit logique DNF, un réseau de portes NAND, une variante de circuit logique à base de multiplexeurs ou un autre circuit logique structurable.

13. Module programmable selon l'une des revendications 9 à 12, **caractérisé en ce que** le module de bloc logique (122) comprend un ou plusieurs blocs logiques qui sont divisés au moins en partie en sous-blocs (5 à 8) configurables individuellement et ayant des tâches prédéfinies.

14. Module programmable selon la revendication 13,
**caractérisé en ce que** l'un des sous-blocs (5 à 8) est conçu pour être utilisé comme dispositif de traitement pour le traitement arithmétique et/ou logique des donnés introduites.

15. Module programmable selon la revendication 13 ou 14, **caractérisé en ce que** l'un des sous-blocs (5 à 8) est conçu pour être utilisé comme un générateur d'état destiné à la commande centralisée du déroulement.

16. Module programmable selon l'une des revendications 13 à 15, **caractérisé en ce que** l'un des sous-blocs (5 à 8) est conçu pour être utilisé comme un dispositif de calcul d'adresses pour calculer les adresses de source et de destination.

17. Module programmable selon l'une des revendications 13 à 16, **caractérisé en ce que** l'un des sous-blocs (5 à 8) est conçu pour être utilisé comme un dispositif d'injection d'instructions pour injecter les instructions dans le pipeline à instructions du noyau intelligent (11) du module programmable.

18. Module programmable selon l'une des revendications précédentes, **caractérisé en ce que** le matériel structurable (12) peut être configuré en utilisant des fusibles et/ou des anti-fusibles.

19. Module programmable selon l'une des revendications précédentes, **caractérisé en ce que** le matériel structurable (12) peut être configuré par des dispositions réversibles.

20. Module programmable selon la revendication 19, **caractérisé en ce que** le matériel structurable (12) peut être configuré en se basant sur les données représentant la configuration souhaitée, et que ces données sont enregistrées dans des dispositifs de mémorisation qui peuvent être fusionnés dans la zone de la mémoire ou la zone d'E/S à laquelle a accès le noyau intelligent (11) du module programmable.

21. Module programmable selon l'une des revendications précédentes, **caractérisé en ce que** la configuration du matériel structurable (12) est seulement possible à des moments prédéfinis.

22. Module programmable selon l'une des revendications 1 à 20, **caractérisé en ce que** la configuration du matériel structurable (12) est possible à tout moment.
